Europäisches Patentamt

European Patent Office

Office européen des brevets

(11) Publication number: **0 350 902 B1**

## EUROPEAN PATENT SPECIFICATION

(45) Date of publication of patent specification: **09.03.94**  (51) Int. Cl.⁵: **H04N 5/782**

(21) Application number: **89112783.9**

(22) Date of filing: **12.07.89**

(54) **Video signal recording and reproducing device.**

(30) Priority: **12.07.88 JP 173268/88**
**12.07.88 JP 173269/88**

(43) Date of publication of application:
**17.01.90 Bulletin 90/03**

(45) Publication of the grant of the patent:
**09.03.94 Bulletin 94/10**

(84) Designated Contracting States:
**DE FR GB**

(56) References cited:

IEEE TRANSACTIONS ON CONSUMER ELEC-
TRONICS. vol. CE-33, no. 3, August 1987,
NEW YORK US pages 203 - 209; Masami Itoga
et al: "Wideband Recording Technology for
High-Definition Baseband VCRs"

(73) Proprietor: **SHARP KABUSHIKI KAISHA**
**22-22 Nagaike-cho**
**Abeno-ku**
**Osaka 545(JP)**

(72) Inventor: **Tabuchi, Toshiaki**
**300-7, Daianji-cho**
**Nara-shi Nara-ken(JP)**
Inventor: **Okuda, Tohru**
**3-7-12, Hiramatsu**
**Nara-shi Nara-ken(JP)**
Inventor: **Sasada, Taizoh**
**2-26-29, Nagaomotomachi**
**Hirakata-shi Osaka-fu(JP)**

(74) Representative: **TER MEER - MÜLLER - STEIN-
MEISTER & PARTNER**
**Mauerkircherstrasse 45**
**D-81679 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a video signal recording and reproducing device, and more particularly to a so called a VTR (video tape recorder) available for recording and reproducing high definition television signal.

DESCRIPTION OF THE PRIOR ART

There has been increasing requirement of improving the quality of television signal and various kinds of technique are proposed. One of the most important technique is the high definition television system so called a high vision system (referred to as HDTV hereinafter). Also there have been made several new proposals for recording and reproducing such HDTV signal by HD-VTR. The HD-VTR must be able to to record and reproduce wide band frequency signals which bear several times of information compared with the prior art and is also required a high transmission rate. In order to accomplish these requirements, the relative speed between the recording head and the magnetic recording tape must be high.

One of known prior arts is "Wideband Recording Technology for High Definition Baseband VCRs" 1987 IEEE vol. CE 33 NO. 3.

As seen in the literature, in order to record and reproducing the brightness band of 20 MHz and the chroma signal band of 5 MHz, the rotation speed of the rotating drum is increased to 5400 r.p.m which is three times of the rotation speed of the conventional rotating drum of conventional video tape recorders (referred to as VTR or VTRs) and each frame of the television picture is divided into three segments, known as 3 segment recording, and each of the segments is recorded on separate tracks of the video tape with two tracks simultaneously recorded so as to reduce the transfer frequency.

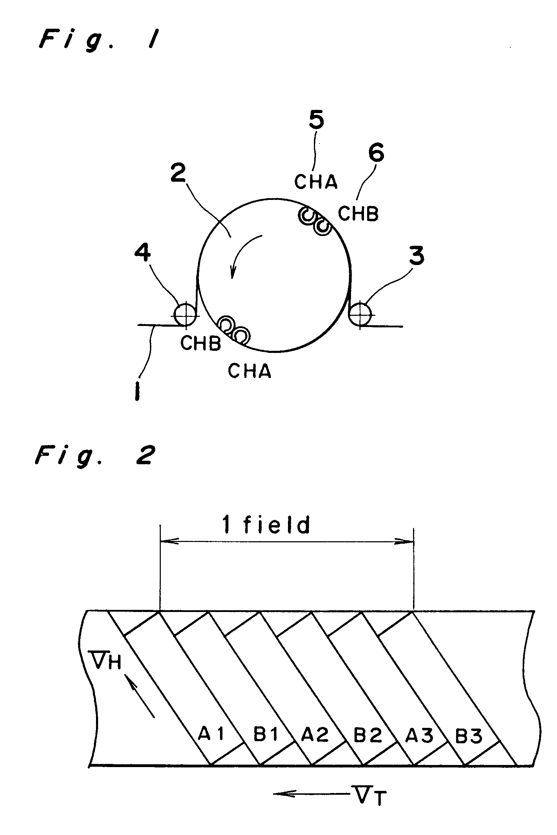

The structure of the magnetic head used in the segment recording system is shown in Fig. 1, wherein a magnetic recording tape 1 is wound around a rotary drum 2 in a helical shape slidably engaged with a supply guide pole 3 and a take up guide pole 4. Two magnetic heads 5 and 6 are adjacently juxtaposed on the rotary drum 2, which rotates 5400 r.p.m. The magnetic heads 5 and 6 and the magnetic recording tape 1 move in a direction shown by arrow marks. In the arrangement mentioned above, the track pattern recorded on the magnetic recording tape 1 is formed as shown in Fig. 2 in which one frame of the video signal is recorded by three rotations of the rotary drum 2. This recording is two channel three segment recording.

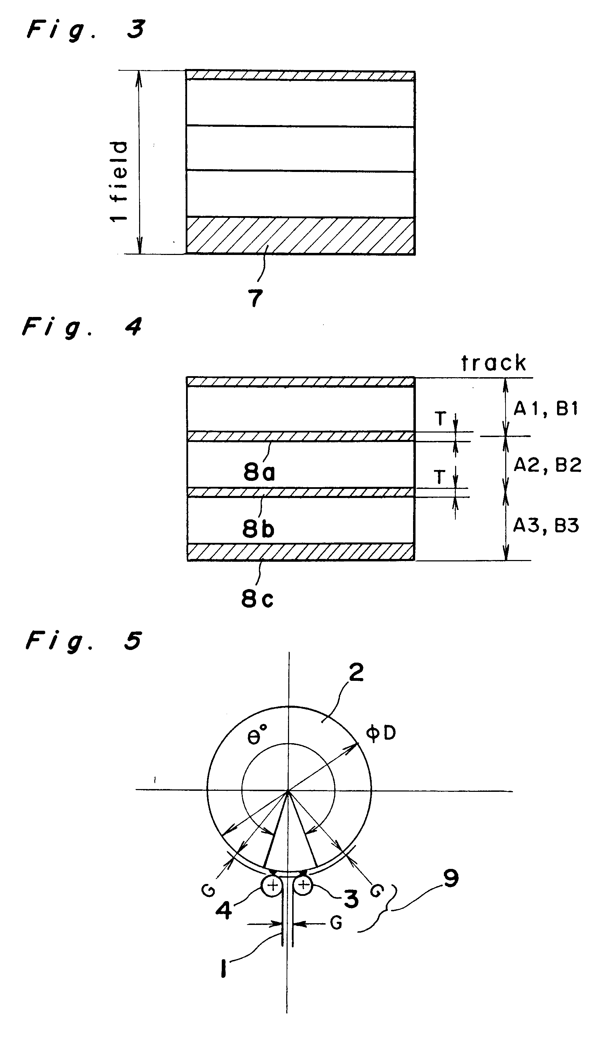

Figs. 3 and 4 show manners of picture division with reference to the track pattern. Fig. 3 shows the input video signal and Fig. 4 shows the signals recorded in the VTR. The input video signal contains the vertical blanking area 7 which is not relevant to the picture to be displayed, and in the domestic use VTR, the recording heads are switched in blanking area. However, in the segment recording in the HD-VTR, in order to divide the picture, the head switching portions 7X are situated not only in the blanking area 7 but in the image area. Therefore, in order to record the video signal, the vertical blanking area 7 is divided into three head switching areas 8a, 8b and 8c as shown in Fig. 4, each video signal is delayed by a time T and the heads are switched. The track pattern and segments in one field is shown in Figs. 2 and 3, from which it can be understood that one field is composed of six tracks. In the reproduction, the signals processing is reversed from the processing at the recording period mentioned above.

In the conventional method, since the video signals of one picture are divided into several segments and composed from the segments, it is necessary to provide an image memory for storing the video signals of a picture, also it is necessary to provide a circuit arrangement for forming the head switching portions 8a, 8b and 8c and for connecting the picture. Therefore, a large volume memory must be provided, whereby the device becomes bulky and the cost of the device is expensive. Such condition is not suitable for the domestic use apparatus.

There has been also proposed a non segment recording which records the video signals without dividing one video frame into segments. The proposed non segment video recording is practised in professional use VTRs so called a 1 inch C format with various dimensions such as a drum diameter of 185 mm ∅, drum rotation speed of 3,600 r.p.m. and tape lap angle 34.6°.

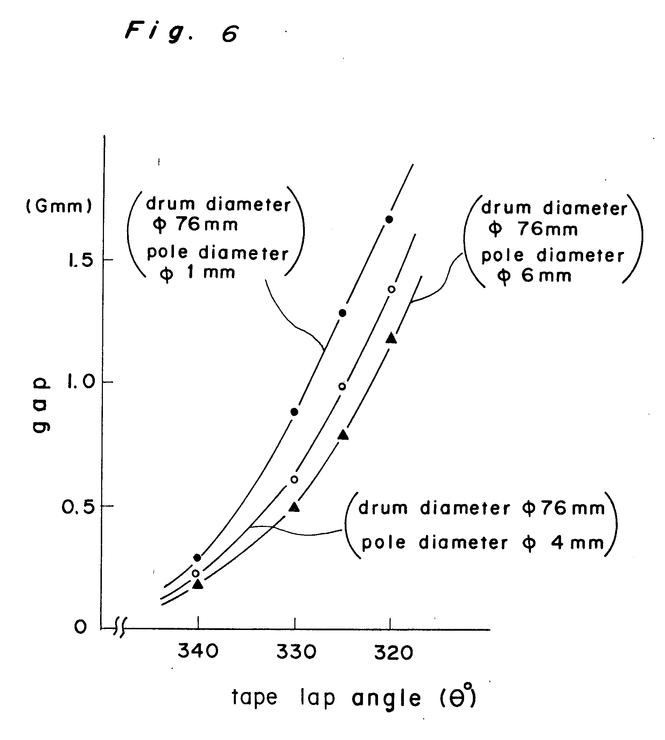

Fig. 5 shows an example of the construction of a magnetic recording head used in the non segment recording system. Fig. 5 shows a layout of the rotary drum 2, supply guide pole 3, take up guide pole 4. Fig. 6 shows various relations between the gap G and the tape lap angle $\theta$. The gap G represents a distance between the cylindrical surface of the guide poles 3 or 4 and the cylindrical surface of the rotary drum 2. The respective guide poles 3 and 4 are slanted against the rotary drum 2 so that the magnetic recording tape can be wound around the rotary drum 2 with a predetermined lead angle for performing a helical recording.

2

In order to divert the non segment recording system VTR as shown in Fig. 6 to the domestic use VTR with the side of the device decreased, if it is assumed that the diameter of the rotary drum 75 mm∅ and the diameter of the guide poles is 4 mm∅, the gap G is too small to use practically. If the diameter of the guide poles is decreased to a small value, the gap G may be increased to a some extent, but it is desired that the diameter of the guide poles is large (making the radius of curvature large) to assure the reliability of the magnetic recording tape. In the example of the C format mentioned above, since a large rotary drum is used and the recoding tape is manually loaded, few obstacles occur for tape recording work.

However, VTR devices to which automatic tape loading mechanisms are attached as the domestic use VTR, there are difficulty of practising as mentioned above.

## SUMMARY OF THE INVENTION

An essential object of the present invention is to provide a HD-VTR and a corresponding method allowing the use of guide pins that are not so small as to risk tape damage.

The recorder of the present invention is defined by the teaching of claim 1 whereas the method is defined by the teaching of claim 6.

In order to lower the data transfer frequency per one recording track, 2 channel recording is employed. By this arrangement, non segment recording can be performed.

According to the present invention, it is an advantage that by employing the non segment recording, a video signal recording with high quality such as HD-VTR system can be performed with rather simple circuit without a large capacity memory device. As the result, the recording and reproducing device of the present invention can be decreased in size and cost, whereby the present invention enables to provide high definition VTRs in domestic use.

It is another advantage of the present invention that the capacity of the line memory for the time compression and expansion of the video data may be 5 to 15 % of the capacity of the memory used in the segment recording, whereby the production cost of the recording and reproducing device can be decreased.

It is a further advantage of the present invention that a good picture can be reproduced without disturbance of picture at the time of fast speed search since one picture can be reproduced by one scanning.

## BRIEF EXPLANATION OF THE DRAWINGS

Fig. 1 is a plan view showing a structure of an example of a conventional magnetic head arrangement,

Fig. 2 is a front view of a magnetic recording tape showing recording tracks formed by the conventional VTR,

Figs. 3 and 4 are schematic views showing operations of the segment recording methods,

Fig. 5 is a plan view showing an example of a conventional magnetic head used in the non segment recording system,

Fig. 6 is a schematic diagram of graphs showing relation between the gap G and the tape lap angle,

Figs. 7, 8 and 9 are schematic diagrams showing essential operation of the video signal recording according to the present invention,

Figs. 10 and 11 are schematic diagrams of the recording heads according to the present invention,

Fig. 12 is a block diagram of an embodiment of a VTR according to the present invention,

Fig. 13 is a schematic diagram of recording heads according to the present invention,

Fig. 14 is a schematic diagram showing a manner of recording in the recording tape according to the present invention, and

Fig. 15 is a schematic diagram showing a positional relation of the magnetic heads shown in Fig. 13.

## DETAILED DESCRIPTION OF THE PREFERRED EMBODIMENT

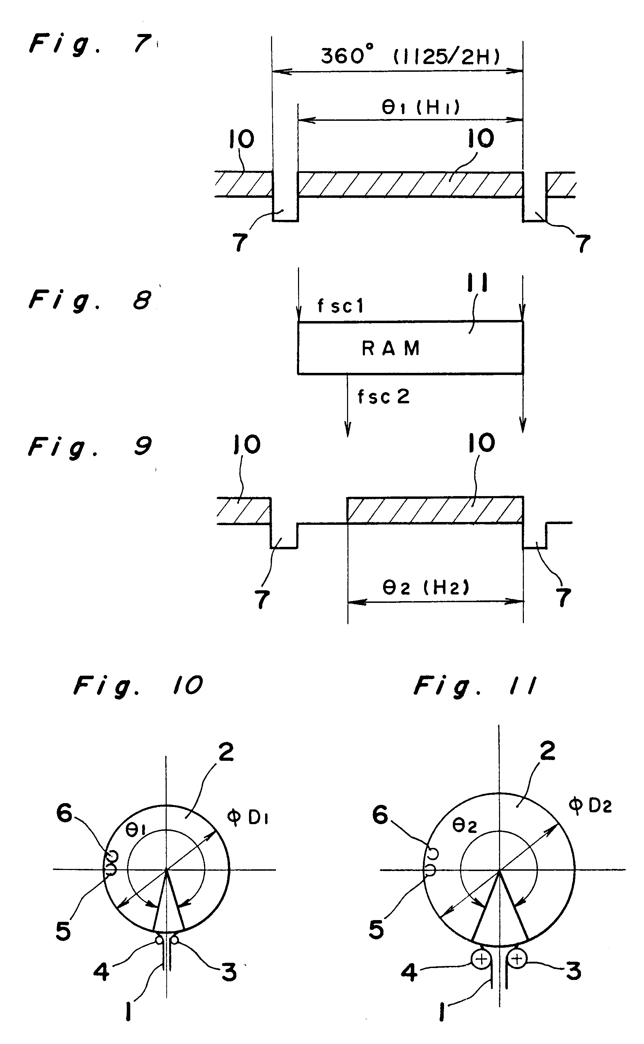

Fig. 7 shows a recording signal of one field which is recorded by one rotation of a rotary drum. The recording signal contains an image and horizontal synchronizing signal portion 10 and a vertical blanking portion 7 which is not related to the image. When recording the recording signal, it is necessary that the head blanking portion, that is, the timing during which the magnetic heads 5 and 6 do not touch with the magnetic recording tape 1 corresponds to the vertical blanking portion 7 similar to the conventional VTR so that the video signal which is the television signal containing the vertical blanking can correspond to the recording signal which is to be recorded by a VTR in real time.

Thus 1 field of the video signal and the recording signal must be in 1/60 seconds.

In order to perform the non segment recording, it is difficult to perform the non segment recording because there occurs interference between the guide poles and the pole diameter must be decreased to 1. 0 mm diameter. Therefore, in the present device, there is provided a RAM 11 for temporarily storing the image signal as shown in Fig. 8 and the image signal is stored in the RAM with a write-in frequency $f_{sc1}$. When the video signal is recorded on the recording tape 1, the data stored in RAM 11 is read out with a read out frequency of $f_{sc2}$ and the read out signal is recorded on the recording tape 1 as shown in Fig. 9. By taking the relation $f_{sc1} < f_{sc2}$, the image data can be treated as the image data is compressed with the rate of $f_{sc1} / f_{sc2}$. In the arrangement, the capacity of RAM 11 may be enough to store the image data of the lines of (H1 - H2) shown in Figs. 7 and 9, whereby it is, not necessary to store all of the picture and the capacity of RAM 11 can be very small.

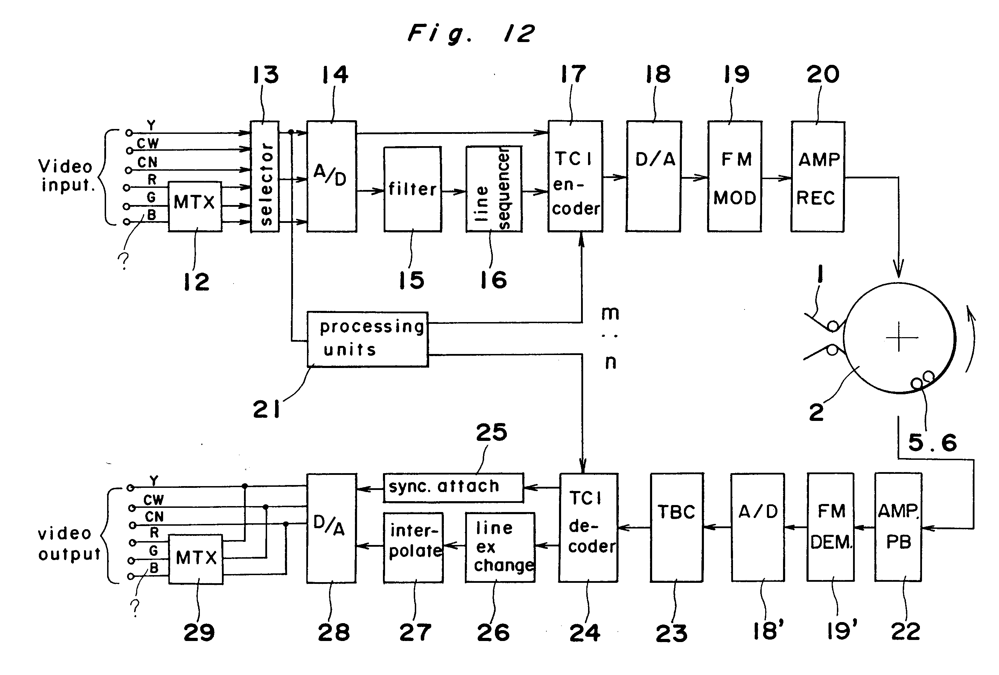

A relation between the drum diameter and tape lap angle is explained with reference to Figs. 10 and 11.

It is assumed that the recording length on the recording tape is constant and the tape lap angle is $\theta 1$ and the drum diameter is $\theta_{D1}$. From the compression ratio $f_{sc1}/f_{sc2}$, the tape lap angle can be expressed as $(f_{sc1}/f_{sc2}) = \theta_2/\theta_1$. Since the length of the one track on the recording tape is constant, in connection with the drum angle, the following equation can be established. $(\theta_{D1}/\theta_{D2}) = \theta_2/\theta_1)$.

As mentioned above, to use the line memory or RAM 11 for storing the video signal enables to decrease the tape lap angle even in the non segment recording as shown in Fig. 11, thereby enabling to increase the diameter of the guide poles, preventing the interference between the guide poles.

An embodiment of the video signal recording and reproducing device according to the present invention will be explained hereinafter with reference to Fig. 12.

Referring to Fig. 12, there is provided a selector 13 which receives a luminance signal Y, wide band color signal Cw and narrow band color signal Cn directly and R, G and B signals through a matrix circuit 12 which converts the R, G and B signals into another set of luminance signal, wide band color signal and narrow band color signal. After Y, Cw and Cn signals or R, G and B signals are selected by the selector 13, the selected video signals are converted into digital video signals by an analog to digital converter (referred to as A/D converter hereinafter) 14. The luminance signal Y thus digitized is applied to a TCI (time compressed integration) encoder 17 directly and the wide band color signal Cw and narrow band color signal thus digitized are applied to a filter 15 in which the wide band and narrow band color signals Cw and Cn are separated in a filter 15 so as to make the bandwidth of the color signal narrow, then the separated color signal is passed in a line sequential circuit 16 for subjecting the signals in the line sequential processing, after that, the output signals from the line sequential circuit 16 are applied to the TCI encoder 17, in which the luminance signal and the color signal are time compressed by the compression ratio of 3 : 1 and are further time compressed by a ratio m:n as supplied by processing units 21.

The sequential processing mentioned above means such signal process to change the signal arrangements in the table 1 to the arrangement shown in the table 2.

## Table 1

|  | 1 line information | 1 line information | 1 line information |
|---|---|---|---|
| Y | $Y_{40}$ | $Y_{41}$ | $Y_{42}$ |
| Cw | $Cw_{40}$ | $Cw_{41}$ | $Cw_{42}$ |
| Cn | $Cn_{40}$ | $Cn_{41}$ | $Cn_{42}$ |

## Table 2

| Y | $Y_{40}$ | $Y_{41}$ | $Y_{42}$ |
|---|---|---|---|
| C | $Cw_{40}$ | $Cn_{41}$ | $Cw_{42}$ |

As shown in the above tables, the line sequential processing means to pick up the information of Cw and Cn alternately so as to compress the data.

The time compressed signals are converted to analog signals by a digital analog signal converter (D/A converter) 18 and frequency modulated in a FM modulator 19. The FM modulated signals are amplified in a recording amplifier 20, then recorded on the recording tape 1 through the recording heads 5 and 6.

The signals reproduced by the recording heads 5 and 6 are applied to an amplifier 22 in which the reproduced signals are amplified and the reproduced signals are FM demodulated in the FM demodulation circuit 19. The demodulated signals are applied to an analog to digital converter 18' in which the demodulated video signals are converted into digital form and the digitized signals are passed a through a time base corrector (referred to as TBC) 23 for jitter correction in terms of the time axis. The output signal of TBC 23 is applied to a time compression integration (TCI) decoder 24, wherein the reproduced signal is separated into the luminance signal and the color signal and decompressed by said ratio m:n as supplied by said processing units 21. The luminance signal is applied to a synchronizing signal attaching circuit 25 so as to attach the synchronizing signal for the signal processing, on the other hand, the color signal is applied to a line exchange circuit 26 so as to recover from the line sequential signal into the original signal and the recovered signal is fed to an interpolation circuit so as to interpolate the color signals Cw and Cn which have been thinned at the time of time compression into the output signal of the line exchange circuit 26 with the signal of about 1H long. These Y, Cw and Cn signals are converted into analog signals by a D/A converter 28 to produce the image signals. The inverted matrix circuit 29 is a converter for outputting the R, G and B signals.

In the arrangement mentioned above, the data compression procedures in case where the HD-TV signals of 1125 lines/frame are recorded and reproduced is explained considering the transfer clock signals used in the circuit arrangement mentioned above.

It is noted that $f_y$ is a video sampling frequency (MHz), $\eta$ is an effective image ratio during 1H of the video signal, N a sampling clock frequency after time compression, K a sampling clock frequency containing the horizontal synchronizing and color phrase burst. The total clock number during 1 line or 1H is expressed as

$$Ne = N + K = \{f_y/(1125 \times 30)\} \times \eta \times (4/3) + K \qquad (1)$$

wherein 4/3 is the data compression ratio of the time compression.

The recording operation using the device according to the present invention is a non segment recording, there is a head blanking portion where no signal is recorded. Considering the signal synchronization, it is required that the line number or the number of H for one round of the rotary drum must be an integer and the line number Hd for one round of the rotary drum can be expressed as

$$Hd = \frac{f_y}{N_e} \cdot \frac{1}{60} \qquad (2)$$

When the way of data compression according to the present invention is applied, assuming that the data compression ratio is n/m, wherein m and n are integer, the master clock frequency $f_t$ at the recording is expressed as $f_t = f_y \times n/m$, the equation (2) can be varied as

$$Hd = \frac{f_t}{N_e} \cdot \frac{1}{60} \qquad (3)$$

and the result of the calculation of the equation (3) must be an integer.

Moreover, assuming that $N_H$ is an effective line number for a frame, $\theta$ is an effective lap angle, the following equation is established

$$\theta = \frac{N_H \times N_e}{f_t / 30} \times 360° \qquad (4)$$

An example of a condition that the clock frequency $f_y$ has a factor against the PCM sampling frequency of 48 KHz is $f_y$ = 51.840 MHz, n = 13, m = 10, K = 85, Ne = 1872 lines, $N_H$ = 1052 lines, Hd = 600 lines and $\theta$ = 315.6 °.

The relation between the rotary drum diameter and tape lap angle can be expressed as

$$D = (1125/2Hd) \times D_0 \qquad (5)$$

5

wherein $D_0$ is the diameter after the data compression.

Assuming that, for example, $D_0$ is 76 mm ⌀, the drum diameter D before the data compression is D = 71.25 mm ⌀ and the physical data compression ratio is $\alpha$ = 0.9735. The tape lap angle is

$$\theta' = \theta \times 1/\alpha = 336.64°.$$

By applying these numeric data to Fig. 6, apparently the pole interference can be decreased and it is possible to use large pole diameter and possibility of tape damage can be decreased, therefore, it can be recognized that the non segment recording can be realized.

Assuming as n/m = 1.2, $f_y$ = 45.36 MHz, K = 37, Ne = 1600, Hd = 567, the tape lap angle $\theta$ is nearly equal to 334°. If the recording tape is lapped around the rotary drum with an excessive lap angle of 5° at each of the entrance to and the exit from the rotary drum, that is the tape is excessively lapped by 10°, the total tape lap angle is 344°. In Fig. 6, according to the numerical value (344°) mentioned above, the gap is about 0.1 mm in a range of the pole diameters 1 mm ⌀ to 6 mm ⌀, therefore, the size of the gap is too small to realize such an arrangement.

Assuming as n/m = 1.25, $f_y$ = 56.16 MHz, K = 64, Ne = 2000 and Hd = 585, the effective tape lap angle $\theta$ is 323.7°. With the excessive tape lap angle of 5° for the entrance and, exit portions, the total tape lap angle is 333.7°. With reference to Fig. 6, the gap is 0.3 to 0.6 mm for the range of the pole diameters of 1 to 6 mm ⌀, therefore no interference between the pole and the rotary drum or both poles, whereby it is possible to realize the arrangement. Therefore it can be said that the data compression ratio n/m should be equal to or greater than 1.25. Increase of the compression ratio n/m causes the mechanical structure restriction of the recording head portion to be relieved but the capacity of the line memory to be increased, whereby production cost is increased. Therefore, it is preferred to choose the data compression ratio n/m is nearly equal and smaller than 1.4.

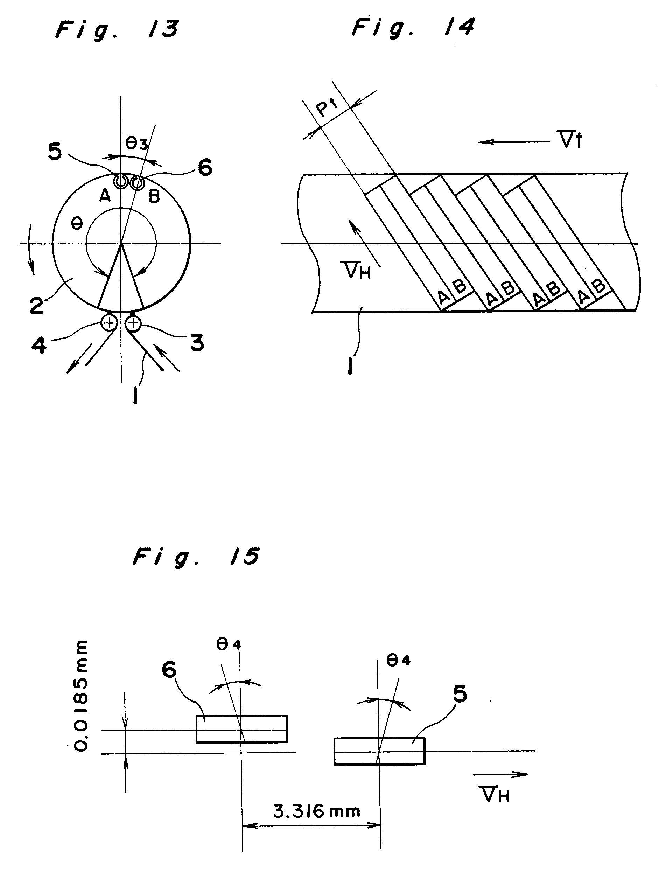

In the preferred embodiment, as shown in Figs. 13 and 14, the angle $\theta$ is 315.6°, the angle $\theta_3$ is 5°, the tape feeding speed Vt is 47.680 mm/sec., the track pitch Pt is 0.0381 mm and the drum rotation speed is 3,600 rpm.. The sizes of the channel A head and channel B heads are shown in Fig. 15. The azimuth angles of the head gap of channel A head 5 and channel B head 6 are opposite each other and the amount of the azimuth angle $\theta 4$ is so selected as to decrease adjacent channel cross talk.

Although there is not described in the foregoing about the recording pattern of PCM audio tracks, control tracks, time code tracks, they are added on the recording tracks recorded by the apparatus according to the present invention.

## Claims

1. A video signal recording and reproducing apparatus comprising:
   - a rotary drum (2) having recording/reproducing heads (5, 6) for recording tracks of information onto a tape (1) which is guided around the drum by using guide poles (3, 4) which keep a predetermined gap between the tape and the drum, each track of information comprising video information and a vertical blanking period;
   - a compression means (11, 17) into which the video information is written in synchronism with a first frequency ($f_y$),and from which it is read in synchronism with a higher second frequency ($f_t$), whereby n lines are read during a second period of time which corresponds to a first period of time during which m lines (m < n) were written into said compression means before, whereby the compressed video information covers a smaller length on said track, and which compression means adds horizontal lines to said vertical blanking period;
   - an output circuitry (18, 19, 20) for outputting the information provided by said compression means to said heads;
   - an input circuitry (22, 19', 18', 23) to input information from said heads; and
   - an expansion means (24) receiving the information read from said heads, and expanding the compressed video information to the original video information.

2. The apparatus according to claim 1, **characterized in that** the ratio n/m is at least 1,25.

3. The apparatus of claim 1 or claim 2, **characterized in that** the ratio n/m is at most 1,4.

4. The apparatus of one of the preceding claims, **characterized in that** the diameter of each guide pole (3, 4) is 1 mm to 6 mm.

5. The apparatus of claim 4, **characterized in that** the diameter of the drum (2) is about 76 mm and said gap is about 0,3 to 0,6 mm.

6. A method for recording and reproducing video information by using a rotary drum (2) having recording/reproducing heads (5, 6) for recording tracks of information onto a tape (1) which is guided around the drum by using guide poles (3, 4) which keep a predetermined gap between the tape and the drum, each track of information comprising video information and a vertical blanking period; which method comprises the following steps:
   - a compression step in which the video information is written in synchronism with a first frequency ($f_y$), and from which it is read in synchronism with a higher second frequency ($f_t$), whereby n lines are read during a second period of time which corresponds to a first period of time during which m lines (m < n) were written into said compression means before, whereby the compressed video information covers a smaller length on said track, and in which step the compression means adds horizontal lines to said vertical blanking period;
   - an output step for outputting the information provided by said compression means to said heads;
   - an input step to input information from said heads; and
   - an expansion step receiving the information read from said heads, and expanding the compressed video information to the original video information.

**Patentansprüche**

1. Videosignalaufzeichnungs- und wiedergabevorrichtung mit:
   - einer Rotationstrommel (2) mit Aufzeichnungs/Wiedergabe-Köpfen (5, 6) zum Aufzeichnen von Informationsspuren auf einem Band (1), das unter Verwendung von Führungsstiften (3, 4) um die Trommel geführt wird, die einen vorgegebenen Spalt zwischen dem Band und der Trommel einhalten, wobei jede Informationsspur Videoinformation und ein Signal zur vertikalen Austastlücke enthält;
   - einer Kompressionseinrichtung (11, 17), in die die Videoinformation synchron zu einer ersten Frequenz ($f_y$) eingeschrieben wird, und aus der sie synchron zu einer höheren zweiten Frequenz ($f_t$) ausgelesen wird, wodurch n Zeilen während einer zweiten Zeitspanne ausgelesen werden, die einer ersten Zeitspanne entspricht, in der m Zeilen (m < n) zuvor in die Kompressionseinrichtung eingeschrieben wurden, wodurch die komprimierte Videoinformation eine kleinere Länge auf der Spur belegt, welche Kompressionseinrichtung der vertikalen Austastlücke Horizontalzeilen hinzufügt;
   - eine Ausgabeschaltung (18, 19, 20) zum Ausgeben der von der Kompressionseinrichtung erstellten Information an die Köpfe;
   - einer Eingabeschaltung (22, 19', 18', 23) zum Eingeben von Information von den Köpfen; und
   - einer Expansionseinrichtung (24), die die von den Köpfen gelesene Information liest und die komprimierte Videoinformation auf die ursprüngliche Videoinformation expandiert.

2. Vorrichtung nach Anspruch 1, **dadurch gekennzeichnet,** daß das Verhältnis n/m mindestens 1,25 beträgt.

3. Vorrichtung nach Anspruch 1 oder Anspruch 2, **dadurch gekennzeichnet,** daß das Verhältnis n/m höchstens 1,4 beträgt.

4. Vorrichtung nach einem der vorstehenden Ansprüche, **dadurch gekennzeichnet**, daß der Durchmesser jedes Führungsstifts (3, 4) 1 mm bis 6 mm beträgt.

5. Vorrichtung nach Anspruch 4, **dadurch gekennzeichnet,** daß der Durchmesser der Trommel (2) ungefähr 76 mm beträgt und der Spalt ungefähr 0,3 bis 0,6 mm groß ist.

6. Verfahren zum Aufzeichnen und Wiedergeben von Videoinformation unter Verwendung einer Rotationstrommel (2) mit Aufzeichnungs/Wiedergabe-Köpfen (5, 6) zum Aufzeichnen von Informationsspuren auf einem Band (1), das unter Verwendung von Führungsstiften (3, 4) um die Trommel geführt wird, die einen vorgegebenen Spalt zwischen dem Band und der Trommel einhalten, wobei jede Informationsspur Videoinformation und ein Signal zur vertikalen Austastlücke enthält; welches Verfahren die folgenden Schritte aufweist:

- einen Kompressionsschritt, in dem die Videoinformation synchron zu einer ersten Frequenz ($f_y$) in eine Kompressionseinrichtung eingeschrieben wird, aus der sie synchron mit einer höheren zweiten Frequenz ($f_t$) ausgelesen wird, wobei n Zeilen während einer zweiten Zeitspanne ausgelesen werden, die einer ersten Zeitspanne entspricht, während der zuvor m Zeilen (m < n) in die Kompressionseinrichtung eingeschrieben wurden, wodurch die komprimierte Videoinformation eine kleinere Länge auf dem Band belegt, und in welchem Schritt die Kompressionseinrichtung der vertikalen Austastlücke Horizontalzeilen hinzufügt;
- einen Ausgabeschritt zum Ausgeben der von der Kompressionseinrichtung erstellten Information an die Köpfe;
- einen Eingabeschritt zum Eingeben von Information von den Köpfen; und
- einen Expansionsschritt, der die von den Köpfen gelesene Information erhält und die komprimierte Viedeoinformation in die ursprüngliche Viedeoinformation expandiert.

## Revendications

1. Appareil d'enregistrement et de reproduction de signaux vidéo, qui comprend:

- un tambour rotatif (2) comportant des têtes d'enregistrement/reproduction (5, 6) pour l'enregistrement de pistes d'informations sur une bande (1) qui est guidée autour du tambour à l'aide de doigts de guidage (3, 4), lesquels maintiennent un écartement prédéterminé entre la bande et le tambour, chaque piste d'informations comprenant des informations vidéo et une période de suppression verticale;
- un moyen de compression (11, 17) dans lequel les informations vidéo sont inscrites en synchronisme avec une première fréquence ($f_y$), et depuis lequel elles sont lues en synchronisme avec une seconde fréquence ($f_t$) supérieure à la première, grâce à quoi n lignes sont lues sur une seconde période de temps qui correspond à une première période de temps pendant laquelle m lignes (m < n) ont été inscrites auparavant dans ledit moyen de compression, les informations vidéo comprimées couvrant ainsi une plus petite longueur sur ladite piste, le moyen de compression ajoutant des lignes horizontales à ladite période de suppression verticale;
- un circuit de sortie (18, 19, 20) pour délivrer auxdites têtes, les informations fournies par ledit moyen de compression;
- un circuit d'entrée (22, 19', 18', 23) pour introduire les informations issues desdites têtes; et
- un moyen de dilatation (24) recevant les informations lues à partir desdites têtes et dilatant les informations vidéo comprimées pour rétablir les informations vidéo initiales.

2. Appareil selon la revendication 1, caractérisé en ce que le rapport n/m est au moins de 1,25.

3. Appareil selon la revendication 1 ou la revendication 2, caractérisé en ce que le rapport n/m est au plus de 1,4.

4. Appareil selon l'une des revendications précédentes, caractérisé en ce que le diamètre de chacun des doigts de guidage (3, 4) est de 1 mm à 6 mm.

5. Appareil selon la revendication 4, caractérisé en ce que le diamètre du tambour (2) est d'environ 76 mm et ledit écartement est d'environ 0,3 à 0,6 mm.

6. Procédé pour enregistrer et reproduire des informations vidéo, à l'aide d'un tambour rotatif (2) comportant des têtes d'enregistrement/reproduction (5, 6) pour l'enregistrement de pistes d'informations sur une bande (1) qui est guidée autour du tambour à l'aide de doigts de guidage (3, 4), lesquels maintiennent un écartement prédéterminé entre la bande et le tambour, chaque piste d'informations comprenant des informations vidéo et une période de suppression verticale; ledit procédé comprenant les étapes suivantes:

- une étape de compression (11, 17) selon laquelle les informations vidéo sont inscrites en synchronisme avec une première fréquence ($f_y$) et depuis lequel elles sont lues en synchronisme avec une seconde fréquence ($f_t$) supérieure à la première, grâce à quoi n lignes sont lues sur une seconde période de temps qui correspond à une première période de temps pendant laquelle m lignes (m < n) ont été inscrites auparavant dans ledit moyen de compression, les informations vidéo comprimées couvrant ainsi une plus petite longueur sur ladite piste, et selon laquelle le moyen de compression ajoute des lignes horizontales à ladite période de suppression verticale;

- un moyen de sortie (18, 19, 20) pour délivrer auxdites têtes, les informations fournies par ledit moyen de compression;
- un moyen d'entrée (22, 19', 18', 23) pour introduire les informations issues desdites têtes; et
- une étape de dilatation (24) selon laquelle les informations lues à partir desdites têtes sont reçues et les informations vidéo comprimées sont dilatées pour que les informations vidéo initiales soient rétablies.

*Fig. 1*

*Fig. 2*

*Fig. 3*

7

*Fig. 4*

track

A1, B1

T

8a

A2, B2

T

8b

A3, B3

8c

*Fig. 5*

2

θ°

φD

G

4

3

G

9

G

I

Fig. 6

EP 0 350 902 B1

**Fig. 7**

360° (1125/2H)

$\theta_1$ (H1)

10

10

7

7

**Fig. 8**

fsc1

11

RAM

fsc2

**Fig. 9**

10

10

7

7

$\theta_2$ (H2)

**Fig. 10**

2

6

$\theta_1$

$\phi$ D1

5

4

3

1

**Fig. 11**

2

6

$\theta_2$

$\phi$ D2

5

4

3

1

13

Fig. 12

EP 0 350 902 B1

Fig. 13

Fig. 14

Fig. 15